# EUROPÄISCHE PATENTANMELDUNG

(11) **EP 1 013 415 A2**
(43) Veröffentlichungstag der Anmeldung: **28.06.2000**
(21) Anmeldenummer: 99125486.3
(22) Anmeldetag: 20.12.1999
(51) Int. Cl.: B32B 27/32, B32B 27/08, G09F 3/04

(54) **Etikettenverbundfolie für das Etikettieren in der Blasform**

(30) Priorität: 23.12.1998 DE 19859790
(71) Anmelder: M & W Verpackungen GmbH, 48599 Gronau (DE)
(72) Erfinder: Schwinn, Georg, 58599 Gronau (DE)
(74) Vertreter: Hoffmeister, Helmut, Dr. Dipl.-Phys.

(57) **Zusammenfassung**

Die Erfindung betrifft eine Etikettenverbundfolie (1') für das Etikettieren in der Blasform, wobei die Etikettenverbundfolie (1') wenigstens eine Innenlage (3') umfaßt, die beim Etikettieren mit dem Kunststoffbehälter in der Blasform zu verbinden ist. Die Innenlage (3') ist eine einschichtige oder mehrschichtige (Schichten 3.1',3.2',3.3',3.4') coextrudierte Folie und ist auf eine polyolefinische Aussteifungslage (2') kaschiert.

## Beschreibung

Die Erfindung betrifft eine Etikettenverbundfolie für das Etikettieren in der Blasform (In-Mold-Labeling = IML) von durch Extrusionsblasformen herzustellenden Kunststoffbehältern.

Aus der DE 43 05 103 A1 ist eine recyclingfähige IML-Etikettenfolie mit wenigstens drei coextrudierten Schichten bekannt, bei der zwischen zwei Deckschichten wenigstens eine Kernschicht angeordnet ist und bei der wenigstens eine der Deckschichten aus einem, bei der Blasform-Arbeitstemperatur oder unterhalb der Blasform-Arbeitstemperatur erweichenden, siegelfähigen Kunststoff besteht. Hierbei ist entweder die Siegelschicht oder die Kernschicht geschäumt, wodurch Wärmespannungen innerhalb des Etiketts besser ausgeglichen werden können, so daß optische Fehlstellen wie Falten oder Blasen an dem am Behälter angebrachten Etikett weitgehend vermieden werden können.

Es hat sich aber gezeigt, daß die Steifigkeit einer solchen Folie für die sichere maschinelle Handhabbarkeit nicht ausreichend ist, so daß Etikettenabschnitte abknicken, in den Transportwegen hängenbleiben und damit Störungen des Betriebsablaufs auslösen können. Der Auftrag geschäumter Schichten erfordert überdies zusätzliche Anlageninvestitionen und Verfahrensschritte bei der Herstellung.

Es ist daher die Aufgabe der vorliegenden Erfindung, eine für das Etikettieren in der Blasform geeignete Etikettenfolie zu verbessern, die eine hohe Steifigkeit aufweist und gut stanzbar ist.

Diese Aufgabe wird gemäß der vorliegenden Erfindung dadurch gelöst, daß die Innenlage eine einschichtige oder eine mehrschichtige coextrudierte Folie ist und daß die Innenlage auf eine polyolefinische Aussteifungslage kaschiert ist.

Die Steifigkeit eines aus der erfindungsgemäßen Etikettenverbundfolie hergestellten Etikettenabschnitts ist deutlich erhöht, so daß eine verbesserte maschinelle Handhabbarkeit gegeben ist. Auch wird durch die steife Etikettenverbundfolie erreicht, daß beim Ausstanzen der Etikettenabschnitte scharfe Schnittkanten erzielt werden, ohne daß es im Schnittbereich zu Ausfransungen kommt oder daß die Schnitte unvollständig sind.

Die Verbindung der Lagen mittels Kaschieren ist - anders als beim Coextrudieren - weitgehend unabhängig vom jeweiligen Aufbau der Lagen, so daß jede Lage für sich optimiert sein kann, also die Innenlage hinsichtlich der Siegelbarkeit und die Aussteifungslage hinsichtlich der Handhabbarkeit und Stanzbarkeit. Während die Innenlage schon bei den relativ niedrigen Werkzeugwandtemperaturen des Blasformwerkzeugs siegelfähig ist, bietet die Außenlage eine hohe mechanische und thermische Widerstandskraft. Durch das Aufkaschieren der Innenlage auf die Aussteifungslage werden somit Folien mit unterschiedlichen Eigenschaften miteinander verbunden.

Die Innenlage kann für sich einschichtig oder mehrschichtig sein. Eine Innenlage aus Polystyrol ist in einschichtiger Ausbildung bereits ausreichend steif, um auf die Aussteifungslage kaschierbar zu sein.

Bei mehrschichtigen Ausführungsformen der Innenlage sind die Kernschichten so ausgebildet, daß sie einerseits mit der leicht siegelnden Siegelschicht coextrudierbar sind und andererseits die Innenlage insgesamt so weit aussteifen, daß ein vollflächiges, verzugsfreies Kaschieren auf die eigentliche Aussteifungslage ermöglicht ist. Eine erhöhte Steifigkeit ist insbesondere dann gegeben, wenn wenigstens eine Deckschicht aus Polyester oder Polystyrol besteht.

Die Kernschichten der Innenlage stellen somit ein wichtiges Bindeglied dar, das die Siegellage mit der Aussteifungslage verbindet. Mit mehreren Kernschichten kann somit über Zwischenschritte erreicht werden, daß eine Verbindung zwischen an sich miteinander nicht oder nur schlecht kombinierbaren Aussteifungslagen und Siegelschichten hergestellt ist. Je mehr Kernlagen vorgesehen sind, desto größere Unterschiede in den Materialeigenschaften der siegelnden und der aussteifenden Lage können überbrückt werden.

Eine mehrschichtige Innenlage umfaßt bei einer vorteilhaften Ausführungsform wenigstens eine Kernschicht und eine Siegelschicht. Die außenliegende Siegelschicht der Innenlage bzw. die einschichtige Innenlage selbst besteht aus einem Homo- oder Copolymer aus der Gruppe der Polyethylene, insbesondere der mit Metallkomplex-Katalysatoren hergestellten Polyethylene (metallocene Polyethylene), oder der Polypropylene. Die genannte Materialauswahl der siegelnden Schicht ermöglicht ein Aufschmelzen schon bei niedrigen Temperaturen. Bei den Copolymeren handelt es sich vorzugsweise um ein EVA-Polyethylen-Copolymer.

Je schneller und vollständiger die Siegelschicht bei der Applikation eines Etikettenabschnitts aufschmilzt, desto fester ist die Verbindung mit der Behälteraußenseite auszubilden. Hierzu hat es sich als vorteilhaft erweisen, daß der Kunststoff der Siegelschicht oder der einschichtigen Innenlage in einem Temperaturbereich von 60° bis 100°C gegen den Kunststoffbehälter siegelbar ist und dabei ein Fließverhalten aufweist, das durch einen Schmelzindex MFI 190°/2,16 nach DIN 53735 von 4 bis 50 g/10 min charakterisiert ist.

Durch Füllung der Aussteifungslage und/oder der Kernschichten einer mehrschichtigen Innenlage mit mineralischen Füllstoffen in hohen Masseanteilen läßt sich die Steifigkeit und Stanzbarkeit weiter erhöhen.

Die Erfindung wird anhand von Beispielen und der Zeichnung näher erläutert. Die Figuren zeigen:
- Fig. 1: eine Etikettenverbundfolie mit einschichtiger Innenlage in schematischer Schnittdarstellung,
- Fig. 2: eine Etikettenverbundfolie mit mehrschichtiger Innenlage in schematischer Schnittdarstellung und
- Fig. 3: einen schematischen Schnitt durch ein Blasformwerkzeug mit Hohlkörper und In-Mold-Label.

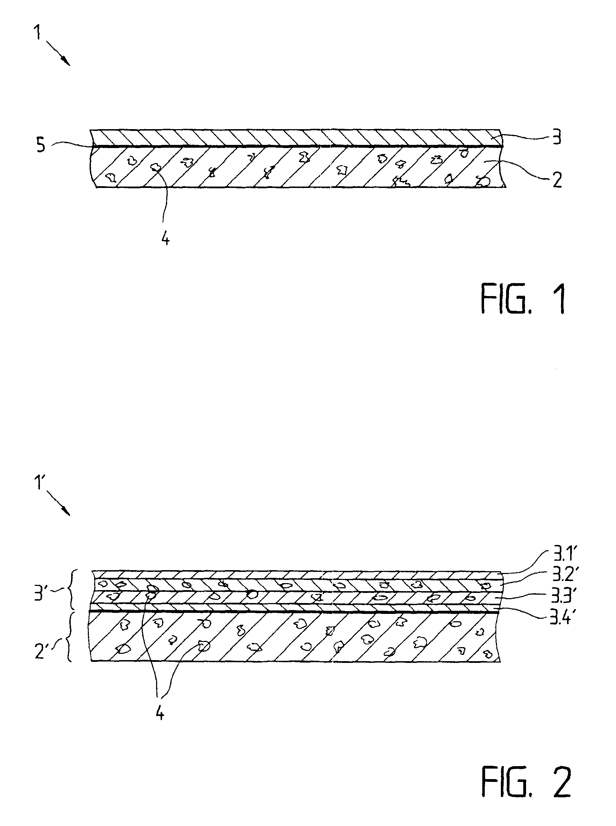

Figur 1 zeigt eine Etikettenverbundfolie 1, bei der eine siegelfähige Innenlage 3 auf eine Aussteifungslage 2 kaschiert ist. Die Innenlage 3 besteht aus einem metallocenen Polyethylen mit einer Siegeltemperatur von 70°C. Die Aussteifungslage 2 besteht aus PE-LD mit einer Kristallitschmelztemperatur von 105 °C und ist mit 40 Gew.-% an mineralischen Füllstoffpartikeln 4, beispielsweise Kreide, Kalk oder Talkum, gefüllt. Die Kunststoffe von Innen- und Aussteifungslage 2, 3 unterscheiden sich in ihren Materialeigenschaften nur wenig voneinander, so daß eine gute Haftverbindung bereits durch eine dünne, beim Kaschieren eingefügte Haftvermittlerschicht 5 hergestellt ist.

In Figur 2 ist eine bevorzugte Ausführungsform einer Etikettenverbundfolie 1' dargestellt. Hierbei besteht die Aussteifungslage 2' aus einer matten Polyethylenfolie (PE) in einer Stärke von 10 bis 50 µm. Der polyolefinische Kunststoff der Aussteifungslage 2' ist mit mineralischen Füllstoffpartikeln 4' versetzt. Der Füllstoffanteil liegt bei 5 bis 40 Gew.-%, vorzugsweise bei 20 Gew.-%. Gut geeignet als Füllstoff ist Talkum mit einer durchschnittlichen Partikelgröße von 2 bis 20 µm, insbesondere mit einer Partikelgröße von 2 bis 5 µm.

Die Innenlage 3' weist im hier dargestellten Beispiel eine Siegelschicht 3.1' aus Polystyrol (PS) auf. Da eine direkte Verbindung der aus polarem PS-Kunststoff bestehenden Siegelschicht 3.1' mit dem unpolaren PE der Aussteifungslage 2' schlecht möglich ist, sind mehrere Kernlagen 3.2' ... 3.4' vorgesehen, mit denen die Verträglichkeit zwischen den genannten Schichten 2',3.1' schrittweise herzustellen ist. Die Innenlage 3 ist dann über die Kernschicht 3.4' auf die Aussteifungslage 2' aufkaschiert. Die mittleren Kernschichten 3.2', 3.3' sind mit 20 Gew.-% Füllstoffen 4' versetzt, wodurch die Innenlage 3' bereits für sich eine hohe Steifigkeit aufweist, so daß nach dem Aufkaschieren der ebenfalls gefüllten Aussteifungslage 2' eine sehr steife Etikettenverbundfolie 1' erhalten wird.

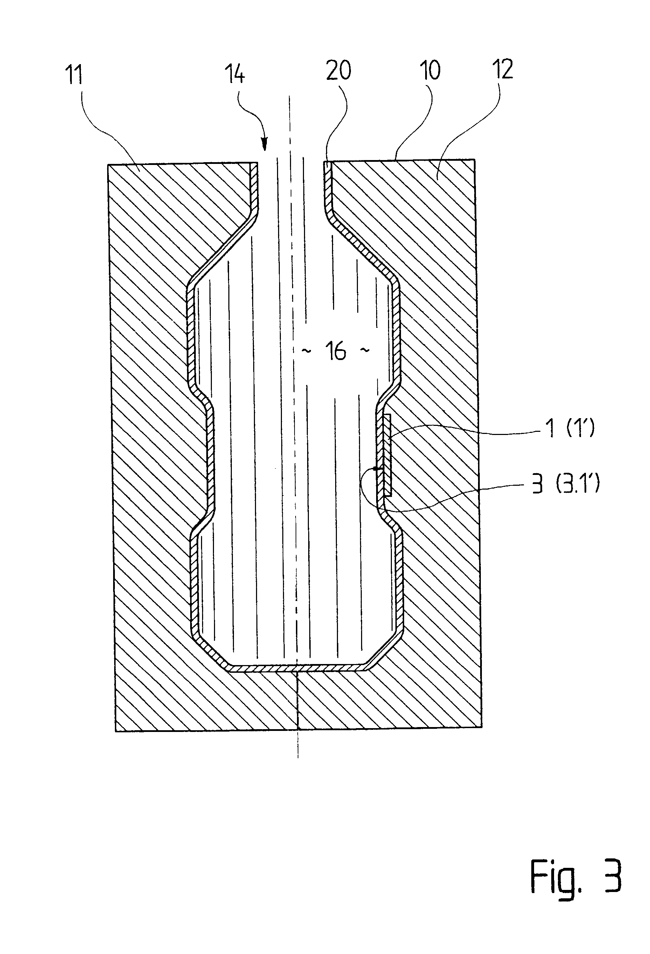

Beim Etikettieren in der Blasform wird, wie Fig. 3 zeigt, ein Abschnitt (In-Mold-Label) einer Etikettenverbundfolie 1, 1' in ein Blasformwerkzeug 10 eingelegt, das aus zwei Werkzeughälften 11, 12 besteht. Die Werkzeughälften 11, 12 bilden im geschlossenen Zustand eine Werkzeugkavität 16 und werden zur Entnahme des fertigen Hohlkörpers 20 auseinander gefahren.

Ein schlauchartiger und endseitig geschlossener, erweichter Formling wird durch eine obere Werkzeugöffnung 14 in die darunterliegende Werkzeugkavität 16 abgesenkt und durch Einleiten von Blasluft gedehnt, bis sich die plastisch verformbare Wandung des Formlings unter Ausbildung eines Hohlkörpers 20 an die Werkzeugwand anlegt und dort erstarrt. Dabei legt sich der Formling dort, wo das In-Mold-Label eingelegt ist, an die leicht siegelfähige Schicht 3, 3.1' an und bildet mit dieser durch Verschmelzen eine innige Verbindung, wodurch ein Abfallen des Etikettenabschnitts 1, 1' vom fertigen Hohlkörper 20 verhindert ist.

Die Etikettenverbundfolie der Erfindung zeichnet sich bei der Verarbeitung durch geringe Rollneigung, gute Stanzbarkeit und hohe Steifigkeit aus.

## Patentansprüche

1. Etikettenverbundfolie (1; 1') für das Etikettieren (InMold-Labeling = IML) in der Blasform (10) von durch Extrusionsblasformen herzustellenden Kunststoffbehältern (20), wobei die Etikettenverbundfolie (1; 1') wenigstens eine Innenlage (3; 3') umfaßt, die beim Etikettieren mit dem Kunststoffbehälter (20) zu verbinden ist und eine bei der oder unterhalb der Blasformungstemperatur erweichende Oberflächenschicht aufweist,
dadurch gekennzeichnet, daß die Innenlage (3; 3') eine einschichtige oder eine mehrschichtige coextrudierte Folie ist und daß die Innenlage (3; 3') auf eine polyolefinische Aussteifungslage (2; 2') kaschiert ist.

2. Etikettenverbundfolle (1) nach Anspruch 1, dadurch gekennzeichnet, daß die Innenlage (3) einschichtig ist und aus einem polyolefinischen Kunststoff besteht, wobei der Kunststoff ein Homo- oder Copolymer aus der Gruppe der Polyethylene, insbesondere der mit Metallkomplex-Katalysatoren hergestellten Polyethylene, oder der Polypropylene ist.

3. Etikettenverbundfolie (1) nach Anspruch 1 oder 2, dadurch gekennzeichnet, daß die Innenlage (3) einschichtig ist und aus Polystyrol besteht.

4. Etikettenverbundfolie (1') nach Anspruch 1, dadurch gekennzeichnet, daß die Innenlage (3') mehrschichtig ist und wenigstens eine Kernschicht (3.2' ... 3.4') und eine Siegelschicht (3.1') umfaßt, wobei wenigstens die außenliegende Siegelschicht (3.1') der Innenlage (3') ein Homo- oder Copolymer aus der Gruppe der Polyethylene, insbesondere der mit Metallkomplex-Katalysatoren hergestellten Polyethylene, oder der Polypropylene ist.

5. Etikettenverbundfolie (1') nach Anspruch 1 oder 2, dadurch gekennzeichnet, daß die Innenlage (3') mehrschichtig ist und wenigstens eine Kernschicht (3.2' ... 3.4') und eine Siegelschicht (3.1') umfaßt, wobei wenigstens die außenliegende Siegelschicht (3.1') der Innenlage (3') aus Polystyrol besteht.

6. Etikettenverbundfolie (1') nach Anspruch 4 oder 5, dadurch gekennzeichnet, daß wenigstens eine Kernschicht (3.2'... 3.4') der Innenlage (3') aus einem mit mineralischen Füllstoffen (4') versetzten polyolefinischen Kunststoff besteht, wobei der Füllstoffgehalt 5 ... 40 Gew.-% beträgt.

7. Etikettenverbundfolie (1; 1') nach einem der vorhergehenden Ansprüche, dadurch gekennzeichnet, daß der Kunststoff der Siegelschicht (3.1') oder der einschichtigen Innenlage (3) in einem Temperaturbereich von 60° bis 100°C gegen den Kunststoffbehälter (20) siegelbar ist und einen Schmelzindex MEI 190°/2,16 nach DIN 53735 von 4 bis 50 g/10 min aufweist.

8. Etikettenverbundfolie (1; 1') nach einem der vorhergehenden Ansprüche, dadurch gekennzeichnet, daß die Aussteifungslage (2; 2') aus einem mit mineralischen Füllstoffen versetzten polyolefinischen Kunststoff besteht, wobei der Füllstoffgehalt 5 ... 40 Gew.-% beträgt.

9. Etikettenverbundfolie (1; 1') nach einem der vorhergehenden Ansprüche, dadurch gekennzeichnet, daß die Aussteifungslage (2; 2') mono- oder biaxial gereckt ist.

10. Etikettenverbundfolie (1; 1') nach einem der vorhergehenden Ansprüche, dadurch gekennzeichnet, daß die Aussteifungslage (2; 2') aus einem orientierten Polyester besteht.

11. Etikettenverbundfolie (1; 1') nach einem der vorhergehenden Ansprüche, dadurch gekennzeichnet, daß die Aussteifungslage (2; 2') eine Dicke von 10 ... 50 µm hat.
